# EUROPEAN PATENT SPECIFICATION

(11) **EP 3 162 861 B1**
(45) Date of publication and mention of the grant of the patent: **13.06.2018**
(21) Application number: 16155156.9
(22) Date of filing: 11.02.2016
(51) Int. Cl.: C09D 5/00

(54) **METHOD FOR MANUFACTURING FLUORINE-BASED RESIN COATING POWDER AND ELECTRODE MATERIAL**
VERFAHREN ZUR HERSTELLUNG VON FLUORBASIERTEM KUNSTHARZÜBERZUGSPULVER UND ELEKTRODENMATERIAL
PROCÉDÉ POUR PRÉPARATION DE POUDRE DE REVÈTEMENT À BASE DE RÉSINE DE FLUOR ET DE SUBSTANCE D' ELECTRODES

(30) Priority: 26.10.2015 KR 20150148693
(43) Date of publication of application: 03.05.2017
(73) Proprietor: Hyundai Motor Company, Seoul 06797 (KR)
(72) Inventor: JEONG, Hae Won, 000-000 Gwangmyeong-si, Gyeonggi-do (KR)
(74) Representative: Isarpatent

(56) References cited:
- DE-A1-102013 214 075
- US-A1- 2008 260 957
- US-A1- 2010 032 308

## Description

### TECHNICAL FIELD

The present disclosure relates to a method for manufacturing a fluorine-based resin coating silver powder and an electrode material, and more particularly, to a method for manufacturing a fluorine-based resin coating silver powder and an electrode material which is capable of improving durability and reliability of a switch contact point.

### BACKGROUND

Currently, about 100 or more switch contact points may be used in a vehicle. This is a phenomenon due to an increase in the number of electronic devices in the vehicle. These switches are essential parts of vehicle operation, and durability and reliability of the switches is directly connected to quality and reliability of the vehicle.

For example, if a consumer feels like opening a window of a driver's seat of the vehicle and thus operates a power window switch, but the window is not opened due to a failure in the switch, the consumer does not consider the event as a failure in the switch, but seems to consider that an entire vehicle window system is faulty.

Further, switches are used as important parts in controlling the vehicle. For example, a brake switch serves to transfer signals regarding whether a driver steps on a brake to various controllers, and to operate a brake lamp of a rear combination lamp of a rear part. Therefore, if the brake switch is out of order, a problem occurs in various control systems, and the brake lamp of the rear part is not turned on.

As described above, in accordance with an increase in importance of the switches in the vehicle, an importance of a contact point material that is essential to a lifespan and reliability of the switch has risen.

In a technology for improving workability by reducing an insertion force of a connector as an example of an existing technology, in order to reduce a surface friction coefficient, a coating film including a mixture of a fluorine-based resin particulate and fluorine-based oil can be formed on a surface of a contact point material base material of the connector.

Herein, a thickness of the coating film can be 0.2 to 0.5 µm, and a ratio of the fluorine-based resin particulate is 20 mass% to 40 mass% based on the total content of the fluorine-based resin particulate and fluorine-based oil in the coating film.

Like the connector, in the case where contact pressure is high and there is no movement once the connector is engaged, in engagement the friction coefficient is small, insertion force is low, and contact resistance is not largely increased.

However, in this technology, since a coating layer is thinly distributed on only the surface of the contact point material base material of the connector, coating peeling according to sliding durability occurs, and even though the coating thickness is 0.2 µm, this technology is disadvantageous in terms of contact resistance.

Further, in a case where grease is applied in order to reduce the friction coefficient of the switch contact point as another example of the existing technology, the following problems may exist. In general, when the switch is designed, it is assumed that the switch is operated on a flat surface. However, the switch/connector may be equipped in a slanted form. There is a problem in that if the grease is exposed at a high temperature over a long period of time, a viscosity of the grease is reduced, and the grease flows down toward a lower side of a slanted surface, and thus an intended function of the grease is lost.

The above information disclosed in this background section is only for enhancement of understanding of the background of the disclosure and therefore it may contain information that does not form the prior art that is already known in this country to a person of ordinary skill in the art.

DE-A-102013214075 discloses a fabric which has a polymer layer on at least one surface thereof, wherein the polymer layer comprises silver nanoparticles which have a grain size of less than 500 nm.

US-A-2010032308 discloses a process for forming a fuser member, wherein a substrate is coated with a dispersion comprising metal nanoparticles having average particle size of 1 nm to 100 nm.

US-A-2008260957 discloses a method of coating a precious metal with a thermally-conductive silicone composition.

### SUMMARY OF THE DISCLOSURE

The present disclosure has been made in an effort to provide a method for manufacturing a fluorine-based resin coating silver powder and an electrode material, which may improve durability and reliability of a switch contact point and reduce a conductivity performance of a switch and a friction coefficient of the switch contact point itself to reduce abrasion.

The first aspect of the present disclosure relates to providing a method for manufacturing a fluorine-based resin coating silver powder, the method includes: a silver powder preparing step of preparing a silver powder having a grain size of 10 nm to 10 µm,
a silver powder solution mixing step of adding the silver powder to an ethanol solution, followed by mixing,
a pH adjustment solution preparing step of preparing a solution having a pH that is adjusted to a set pH,
a fluorine silane preparing step of preparing fluorine silane, and
a fluorine-based resin coating silver powder manufacturing step of manufacturing a fluorine-based resin coating silver powder coated with the fluorine-based resin at a thickness of 1 nm to 10 nm by adding the silver powder mixed with the ethanol solution in the silver powder solution mixing step and the fluorine silane prepared in the fluorine silane preparing step to the solution having the pH that is adjusted to the pH set in the pH adjustment solution preparing step, followed by mixing.

In the pH adjustment solution preparing step, the pH of the solution may be set to a range of 2 to 7.5.

In the pH adjustment solution preparing step, the pH of the solution may be adjusted to the set pH by using an acid.

The acid may be formed of a nitric acid and an acetic acid not leaving a salt component in drying.

The fluorine silane may be formed of any one selected from perfluorooctyl triethoxysilane, triethyl(trifluoromethyl)silane, trimethyl(trifluoromethyl)silane, trimethoxy (3,3,3-trifluoropropyl)silane, trimethyl(trifluoromethyl)silane, dimethoxy-methyl (3,3,3-trifluoropropyl)silane, diisopropyl (3,3,4,4,5,5,6,6-nonafluorohexyl)silane, triethoxy[4-(trifluoromethyl)phenyl]silane, and 1H,1H,2H,2H-perfluorooctyltriethoxysilane.

The second aspect of the present disclosure relates to providing a method for manufacturing an electrode material, the method includes: a fluorine-based resin coating silver powder preparing step of preparing a fluorine-based resin coating silver powder according to the method in the first aspect of the present disclosure,
a silver powder preparing step of preparing the silver powder having a grain size of 10 nm to 10 µm,
a silver powder mixing step of mixing the fluorine-based resin coating silver powder prepared in the fluorine-based resin coating silver powder preparing step and the silver powder prepared in the silver powder preparing step, and
a sintering step of printing a mixture powder mixed in the silver powder mixing step on a surface of an electrode and then sintering the mixture powder at a set sintering temperature.

In the sintering step, the sintering temperature may be set to a range of 300 to 350°C.

In the sintering step, a sintering time may be set to a range of 1 to 30 minutes according to a printing amount.

According to the exemplary embodiments of the present disclosure, it is possible to simultaneously secure abrasion resistance and electric conductivity of an electric contact point.

As compared to general silver (Ag) plating, a friction coefficient is reduced and abrasion is reduced, and as compared to existing resin coating, electric conductivity is excellent (this is because resin coating is a non-conductive film and disturbs conductivity).

Further, fluorine silane of a surface of a fluorine-based resin coating silver powder trespasses on a sintered pore (pore effect) to attain a continuous lubrication effect, and thus even after performing repeated times, it is possible to attain the continuous lubrication effect.

In addition, even though a switch and a connector are equipped in a slanted form, a lubrication component does not flow down, and it is possible to reduce a silver plate thickness as compared to the same durable lifespan.

### BRIEF DESCRIPTION OF THE DRAWINGS

FIG. 1 is a schematic flowchart of a method for manufacturing a fluorine-based resin coating silver powder according to an exemplary embodiment of the present disclosure.
FIG. 2 is a schematic flowchart of a method for manufacturing an electrode material according to an exemplary embodiment of the present disclosure.
FIG. 3 is a view illustrating a use state of the electrode material manufactured according to the method for manufacturing the fluorine-based resin coating silver powder and the electrode material according to an exemplary embodiment of the present disclosure.

### DETAILED DESCRIPTION

The present disclosure will be described more fully hereinafter with reference to the accompanying drawings, in which exemplary embodiments of the disclosure are shown so as to be easily understood by the person with ordinary skill in the art. As easily understood by the person with ordinary skill in the art to which the present disclosure pertains, the exemplary embodiments which will be described below may be variously modified without departing from the spirit and the scope of the present disclosure. If possible, the same or similar portions are represented by using the same reference numeral in the drawings.

The terminologies used hereinafter are set forth just to illustrate a specific exemplary embodiment but not to limit the present disclosure. It must be noted that, as used in the specification and the appended claims, the singular forms include plural references unless the context clearly dictates otherwise. It will be further understood that the terms "comprises", when used in this specification, specify the presence of stated properties, regions, integers, steps, operations, elements, and/or components, but do not preclude the presence or addition of one or more other properties, regions, integers, steps, operations, elements, components, and/or groups.

All terms including technical terms and scientific terms used herein have the same meaning as the meaning generally understood by the person with ordinary skill in the art to which the present disclosure pertains. The terminologies that are defined previously are further understood to have the meaning that coincides with relating technical documents and the contents that are disclosed currently, but not interpreted as the ideal or very official meaning unless it is defined.

A method for manufacturing a fluorine-based resin coating silver powder and an electrode material according to an exemplary embodiment of the present disclosure is a contact point material technology, or method, of reducing friction coefficients of a connector and a switch to reduce abrasion of a sliding-type contact point and thus improve electric durability and reliability, and allows metals sufficiently to come into contact with each other so that the friction coefficient is reduced but an electric conductive performance is not largely affected.

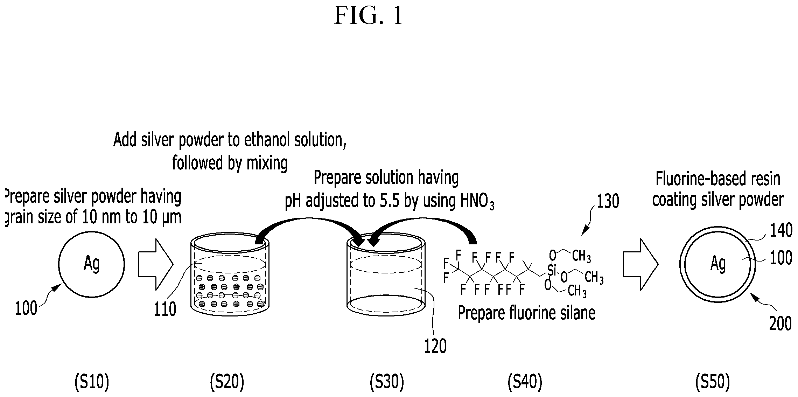

FIG. 1 is a schematic flowchart of the method for manufacturing the fluorine-based resin coating silver powder according to the first aspect of the present disclosure.

Referring to FIG. 1, the method for manufacturing the fluorine-based resin coating silver powder 200 according to the first aspect of the present disclosure includes a silver powder preparing step (S10) of preparing a silver (Ag) powder 100 having a grain size of 10 nm to 10 µm, a silver powder solution mixing step (S20) of adding the silver powder 100 to an ethanol solution 110, followed by mixing, a pH adjustment solution preparing step (S30) of preparing a solution 120 having a pH that is adjusted to a set pH, a fluorine silane preparing step (S40) of preparing fluorine silane 130, and a fluorine-based resin coating silver powder manufacturing step (S50) of manufacturing a fluorine-based resin coating silver powder 200 coated with the fluorine-based resin 140 at a thickness of 1 nm to 10 nm by adding the silver powder mixed with the ethanol solution 110 in the silver powder solution mixing step (S20) and fluorine silane 130 prepared in the fluorine silane preparing step (S40) to the solution 120 having the pH that is adjusted to the pH set in the pH adjustment solution preparing step (S30), followed by mixing.

In the silver powder preparing step S10, the grain size of the silver powder 100 is 10 nm to 10 µm, and a set coating thickness of the fluorine-based resin 140 is 1 nm to 10 nm.

In a case where the grain size of the silver powder 100 is 10 nm or less, the surface may not be coated well due to an agglomeration phenomenon of the silver powder 100, which is not suitable.

In addition, in a case where the grain size of the silver powder 100 is 10 µm or more, the size may be larger than about 1000 times of an actual coating thickness, and thus a friction reduction effect by coating may not be large, which is not suitable.

Further, in a case where the grain size of the silver powder 100 is 10 µm or more, a temperature at which the contact point is sintered may be largely increased to 600°C or more, so that there may be concern about damage to a coating film, which is not suitable.

Therefore, it may be suitable that the grain size of the silver powder 100 is 20 nm to 10 µm.

In the pH adjustment solution preparing step S30, the pH of the solution 120 may be set to the range of 2 to 7.5 (the optimum range is 4 to 6). The reason why the range of the pH is set as described above is that when the pH is 2 or less, it may be difficult to attain a desired effect by the content of the solvent, and when the pH is 7.5 or more, since the solution has alkalinity, a reaction speed may be very slow, and thus it may be difficult to manufacture the fluorine-based resin coating silver powder.

In the PH adjustment solution preparing step S30, the pH of the solution 120 may be adjusted to the set pH by using the acid.

The acid may be formed of an acidic solution not leaving a salt component in drying, such as a nitric acid and an acetic acid.

The fluorine silane may be formed of any one selected from perfluorooctyl triethoxysilane, triethyl(trifluoromethyl)silane, trimethyl(trifluoromethyl)silane, trimethoxy (3,3,3-trifluoropropyl)silane, trimethyl(trifluoromethyl)silane, dimethoxy-methyl (3,3,3-trifluoropropyl)silane, diisopropyl (3,3,4,4,5,5,6,6-nonafluorohexyl)silane, triethoxy[4-(trifluoromethyl)phenyl]silane, 1H,1H,2H,2H-perfluorooctyltriethoxysilane, and the like.

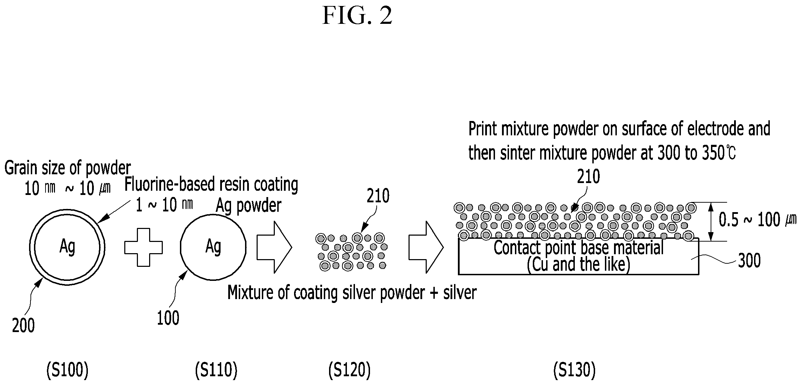

FIG. 2 is a schematic flowchart of the method for manufacturing the electrode material according to the second aspect of the present disclosure.

The description of the method for manufacturing the electrode material according to the second aspect of the present disclosure is the same as that of the method for manufacturing the fluorine-based resin coating silver powder according to the first aspect of the present disclosure with the exception of the following particular description, and thus the full detailed description thereof will be omitted.

Referring to FIG. 2, the method for manufacturing the electrode material according to the second aspect of the present disclosure includes a fluorine-based resin coating silver powder preparing step (S100) of preparing a fluorine-based resin coating silver powder 200 according to the method in the first aspect of the present disclosure, a silver powder preparing step (S110) of preparing the silver (Ag) powder 100 having a grain size of 10 nm to 10 µm, a silver powder mixing step (S120) of mixing the fluorine-based resin coating silver powder 200 prepared in the fluorine-based resin coating silver powder preparing step (S110) and the silver powder 100 prepared in the silver powder preparing step (S110), and a sintering step (S130) of printing a mixture powder 210 mixed in the silver powder mixing step (S120) on a surface of an electrode (contact point base material) 300 and then sintering the mixture powder 210 at a set sintering temperature.

In the silver powder preparing step (S110), the grain size of the silver powder 100 is 10 nm to 10 µm, and a set coating thickness of the fluorine-based resin 140 is 1 nm to 10 nm.

In a case where the grain size of the silver powder 100 is 10 nm or less, the surface may not be coated well due to an agglomeration phenomenon of the silver powder 100, which may not be suitable.

In addition, in a case where the grain size of the silver powder 100 is 10 µm or more, the size may be larger than about 1000 times of an actual coating thickness, and thus a friction reduction effect by coating may not be large, which may not be suitable.

Further, in the case where the grain size of the silver powder 100 is 10 µm or more, a temperature at which the contact point is sintered may be largely increased to 600°C or more, so that there may be concern about damage to a coating film, which may not be suitable.

Therefore, it may be suitable that the grain size of the silver powder 100 is 20 nm to 10 µm.

In the sintering step (S130), the sintering temperature may be in the range of about 300 to 350°C.

In the sintering step (S130), a sintering time may be in the range of 1 to 30 minutes according to a printing amount.

In the sintering step (S130), a sintering thickness on the surface of the electrode may be 0.5 to 100 µm.

In the sintering step (S130), since the silver powder has the nano-size, sintering may be feasible at the printing temperature of about 300°C which is lower than an actual melting point. At this temperature, since the fluorine-based resin 140 is not damaged, a desired result in the present disclosure may be obtained.

The electrode (contact point base material) 300 may be formed of copper (Cu) and the like.

Hereinafter, an action of the method for manufacturing the fluorine-based resin coating silver powder and the electrode material according to the first and the second aspects of the present disclosure will be described with reference to FIGS. 1 and 2.

After the silver powder 100 is manufactured in a fine size, through fluorine-based resin coating treatment, a novel type fluorine-based resin coating silver powder 200 is manufactured.

That is, the silver (Ag) powder 100 having the grain size of 10 nm to 10 µm is prepared, the silver powder 100 is added to the ethanol solution 110, followed by mixing (S20), the solution 120 having the pH that is adjusted to 5.5 by using HNO₃ is prepared (S30), and fluorine silane 130 is prepared (S40).

In addition, the fluorine-based resin coating silver powder 200 coated with the fluorine-based resin 140 at a set thickness is manufactured by adding the silver powder 100 mixed with the ethanol solution 110 in the silver powder solution mixing step (S20) and the fluorine silane 130 prepared in the fluorine silane preparing step (S40) to the solution 120 having the pH that is adjusted to the PH set in the PH adjustment solution preparing step (S30), followed by mixing.

In this case, the coating thickness of the fluorine-based resin 140 is set to 1 nm to 10 nm.

In addition, as described above, after the fluorine-based resin coating silver powder 200 coated with the fluorine-based resin 140 at the set thickness is manufactured, the silver powder 200, which is coated with the fluorine-based resin, and the silver powder 100, which is not coated with the fluorine-based resin, are appropriately mixed, and the mixture powder 210 is then printed on the surface of the electrode (contact point base material) 300 (S130).

In addition, after printing, the mixture powder 210 printed on the surface of the electrode (contact point base material) 300 may be sintered at about 300 to 350°C for 1 to 30 minutes according to a printing amount.

Since the silver powder 100 has a nano-size, sintering is feasible at the printing temperature of about 300°C which is lower than an actual melting point. At this temperature, since the fluorine-based resin is not damaged, a desired result in the present disclosure may be obtained.

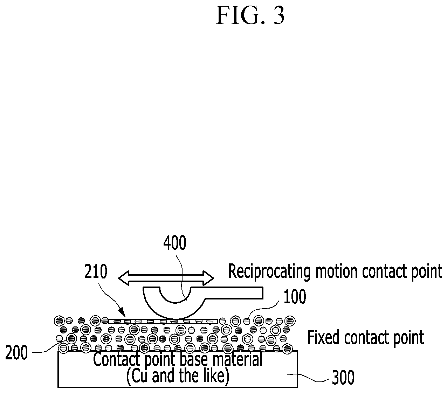

FIG. 3 is a view illustrating a use state of the electrode material manufactured according to a method for manufacturing the fluorine-based resin coating silver powder and an electrode material according to the first and the second aspects of the present disclosure.

Referring to FIG. 3, abrasion may occur on the surface of the contact point base material 300 as the switch 400 is operated, and in this case, the fluorine silane 130 of the surface of the fluorine-based resin coating silver powder 200 trespasses on the sintered pore to attain the continuous lubrication effect, and this phenomenon may reduce the friction coefficient of the contact point and improve abrasion resistance characteristics.

[Table 1] is a table exhibiting comparison evaluation results of the existing technology (silver plating) and the Example of the present disclosure (fluorine-based resin coating silver powder) with respect to the abrasion resistance lifespan (number) according to the kind of the contact point.

According to the following [Table 1], it can be seen that in the case of the Example of the present disclosure (fluorine-based resin coating silver powder), as compared to the case of the existing technology (silver plating), the abrasion resistance lifespan (number) is significantly increased.

**[Table1]**

| Classificatio n | Existing Technology (silver plating) | | | Example of the Present Disclosure (fluorine-based resin coating silver powder | |
|---|---|---|---|---|---|
| | 1 µm | 5 µm | 20 µm | 5 µm | 10 µm |
| 1 | 55,670 | 301,054 | 1,910,154 | 2,510,245 | 6,541,215 |
| 2 | 60,247 | 312,574 | 2,117,557 | 2,915,515 | 6,687,144 |
| 3 | 54,328 | 354,245 | 2,520,136 | 2,717,389 | 6,781,102 |
| 4 | 57,234 | 294,387 | 2,312,228 | 2,880,108 | 6,241,047 |
| 5 | 59,214 | 332,157 | 2,215,412 | 2,651,138 | 5,987,513 |

## Claims

1. A method for manufacturing a fluorine-based resin coating silver powder **200**, the method comprising:
a silver powder preparing step **(S10)** of preparing a silver powder **100** having a grain size of 10 nm to 10 µm;
a silver powder solution mixing step **(S20)** of adding the silver powder **100** to an ethanol solution **110**, followed by mixing;
a pH adjustment solution preparing step **(S30)** of preparing a solution **120** having a pH that is adjusted to a set pH;
a fluorine silane preparing step **(S40)** of preparing fluorine silane **130;** and
a fluorine-based resin coating silver powder manufacturing step **(S50)** of manufacturing a fluorine-based resin coating silver powder **200** coated with the fluorine-based resin **140** at a thickness of 1 nm to 10 nm by adding the silver powder mixed with the ethanol solution **110** in the silver powder solution mixing step **(S20)** and the fluorine silane **130** prepared in the fluorine silane preparing step **(S40)** to the solution **120** having the pH that is adjusted to the pH set in the pH adjustment solution preparing step (S30), followed by mixing.

2. The method of claim 1, wherein in the pH adjustment solution preparing step **(S30)**, the pH of the solution **120** is set to a range of 2 to 7.5.

3. The method of claim 2, wherein in the pH adjustment solution preparing step **(S30)**, the pH of the solution **120** is adjusted to the set pH by using an acid.

4. The method of claim 3, wherein the acid is formed of a nitric acid and an acetic acid not leaving a salt component in drying.

5. The method of claim 1, wherein the fluorine silane **130** is formed of any one selected from perfluorooctyl triethoxysilane, triethyl(trifluoromethyl)silane, trimethyl(trifluoromethyl)silane, trimethoxy (3,3,3-trifluoropropyl)silane, trimethyl(trifluoromethyl)silane, dimethoxy-methyl (3,3,3-trifluoropropyl)silane, diisopropyl (3,3,4,4,5,5,6,6-nonafluorohexyl)silane, triethoxy[4-(trifluoromethyl)phenyl]silane, and 1H,1H,2H,2H-perfluorooctyltriethoxysilane.

6. A method for manufacturing an electrode material, the method comprising:
a fluorine-based resin coating silver powder preparing step **(S100)** of preparing a fluorine-based resin coating silver powder **200**, according to any one of claims 1 to 5;
a silver powder preparing step **(S110)** of preparing the silver powder **100** having a grain size of 10 nm to 10 µm;
a silver powder mixing step **(S120)** of mixing the fluorine-based resin coating silver powder **200** prepared in the fluorine-based resin coating silver powder preparing step **(S100)** and the silver powder **100** prepared in the silver powder preparing step **(S110)**; and
a sintering step **(S130)** of printing a mixture powder **210** mixed in the silver powder mixing step **(S120)** on a surface of an electrode **300** and then sintering the mixture powder **210** at a set sintering temperature.

7. The method of claim 6, wherein in the sintering step **(S130)**, the sintering temperature is set to a range of 300 to 350° C.

8. The method of claim 7, wherein in the sintering step **(S130)**, a sintering time is set to a range of 1 to 30 minutes according to a printing amount.

## Patentansprüche

1. Verfahren zur Herstellung eines Harzbeschichtungs-Silberpulvers auf Fluor-Basis 200, wobei das Verfahren Folgendes umfasst:
einen Schritt des Herstellens eines Silberpulvers (S10) zum Herstellen eines Silberpulvers 100 mit einer Korngröße von 10 nm bis 10 µm;
einen Schritt des Lösungsmischens des Silberpulvers (S20) zum Zusetzen des Silberpulvers 100 zu einer Ethanol-Lösung 110, gefolgt von Mischen,
einen Schritt des Einstellens des pH-Werts einer Lösung (S30) zum Herstellen einer Lösung 120 mit einem pH-Wert, der auf einen bestimmten pH-Wert eingestellt wird,
einen Schritt des Herstellens von Fluor-Silan (S40) zum Herstellen von Fluor-Silan 130, und
einen Schritt des Herstellens eines Harzbeschichtungs-Silberpulvers auf Fluor-Basis (S50) zum Herstellen eines Harzbeschichtungs-Silberpulvers auf Fluor-Basis 200, das mit dem Harz auf Fluor-Basis 140 mit einer Dicke von 1 nm bis 10 nm beschichtet ist, indem das mit der Ethanol-Lösung 110 in dem Schritt des Lösungsmischens des Silberpulvers (S20) gemischte Silberpulver und das in dem Schritt des Herstellens von Fluor-Silan (S40) hergestellte Fluor-Silan 130 zu der Lösung 120 zugesetzt wird, deren pH-Wert in dem Schritt des Einstellens des pH-Werts der Lösung (S30) auf den bestimmten pH-Wert eingestellt wird, gefolgt von Mischen.

2. Verfahren nach Anspruch 1, wobei in dem Schritt des Einstellens des pH-Werts der Lösung (S30) der pH-Wert der Lösung 120 auf einen Bereich von 2 bis 7,5 eingestellt wird.

3. Verfahren nach Anspruch 2, wobei in dem Schritt des Einstellens des pH-Werts der Lösung (S30) der pH-Wert der Lösung 120 durch Verwendung einer Säure auf den bestimmten pH-Wert eingestellt wird.

4. Verfahren nach Anspruch 3, wobei die Säure aus einer Salpetersäure und einer Essigsäure gebildet wird, wobei beim Trocknen keine Salzkomponente übrig bleibt.

5. Verfahren nach Anspruch 1, wobei das Fluor-Silan 130 aus einer Substanz ausgewählt aus Perfluorooctyltriethoxysilan, Triethyl(trifluoromethyl)silan, Trimethyl(trifluoromethyl)silan, Trimethoxy-(3,3,3-trifluoropropyl)silan, Trimethyl(trifluoromethyl)silan, Dimethoxy-methyl-(3,3,3-trifluoropropyl)silan, Diisopropyl-(3,3,4,4,5,5,6,6-nonafluorohexyl)silan, Triethoxy[4-(trifluoromethyl)phenyl]silan und 1H,1H,2H,2H-Perfluorooctyltriethoxysilan gebildet wird.

6. Verfahren zur Herstellung eines Elektrodenmaterials, wobei das Verfahren Folgendes umfasst:
einen Schritt des Herstellens eines Harzbeschichtungs-Silberpulvers auf Fluor-Basis (S100) zum Herstellen eines Harzbeschichtungs-Silberpulvers auf Fluor-Basis 200 nach einem der Ansprüche 1 bis 5,
einen Schritt des Herstellens eines Silberpulvers (S110) zum Herstellen eines Silberpulvers 100 mit einer Korngröße von 10 nm bis 10 µm,
einen Schritt zum Mischen des Silberpulvers (S120) zum Mischen des in dem Schritt des Herstellens des Harzbeschichtungs-Silberpulvers auf Fluor-Basis (S100) hergestellten Harzbeschichtungs-Silberpulvers auf Fluor-Basis 200 und des in dem Schritt des Herstellens des Silberpulvers (S110) hergestellten Silberpulvers 100; und
einen Schritt des Sinterns (S130) zum Aufdrucken eines in dem Schritt des Mischens des Silberpulvers (S120) gemischten Mischpulvers 210 auf eine Oberfläche einer Elektrode 300 und dann Sintern des Mischpulvers 210 bei einer bestimmten Sintertemperatur.

7. Verfahren nach Anspruch 6, wobei in dem Schritt des Sinterns (S130) die Sintertemperatur in einen Bereich von 300 bis 350 °C eingestellt wird.

8. Verfahren nach Anspruch 7, wobei in dem Schritt des Sinterns (S130) eine Sinterzeit in einen Bereich von 1 bis 30 Minuten gemäß der aufzudruckenden Menge eingestellt wird.

## Revendications

1. Procédé de fabrication d'une poudre d'argent à revêtement de résine à base de fluor 200, le procédé comprenant :
une étape de préparation de poudre d'argent (S10) de préparation d'une poudre d'argent 100 ayant une taille de grain de 10 nm à 10 µm ;
un étape de mélange de solution de poudre d'argent (S20) d'addition de la poudre d'argent 100 à une solution d'éthanol 110, suivie par un mélange ;
une étape de préparation de solution à ajustement de pH (S30) de préparation d'une solution 120 ayant un pH qui est ajusté à un pH réglé ;
une étape de préparation de silane de fluor (S40) de préparation de silane de fluor 130 ; et
une étape de fabrication de poudre d'argent à revêtement de résine à base de fluor (S50) de fabrication d'une poudre d'argent à revêtement de résine à base de fluor 200 avec la résine à base de fluor 140 à une épaisseur de 1 à 10 nm par addition de la poudre d'argent mélangée avec la solution d'éthanol 110 dans l'étape de mélange de solution de poudre d'argent (S20) et le silane de fluor 130 préparé dans l'étape de préparation de silane de fluor (S40) à la solution 120 ayant le pH qui est ajusté au pH réglé dans l'étape de préparation de la solution à ajustement de pH (S30), suivi par un mélange.

2. Procédé selon la revendication 1, dans lequel dans l'étape de préparation de solution à ajustement de pH (S30), le pH de la solution 120 est réglé à une plage de 2 à 7,5.

3. Procédé selon la revendication 2, dans lequel dans l'étape de préparation de solution à ajustement de pH (S30), le pH de la solution 120 est ajusté au pH réglé en utilisant un acide.

4. Procédé selon la revendication 3, dans lequel l'acide est formé d'un acide nitrique et d'un acide acétique ne laissant pas un composant salin au séchage.

5. Procédé selon la revendication 1, dans lequel le silane de fluor 130 est formé d'un quelconque choisi parmi le perfluorooctyl triéthoxysilane, le triéthyl(trifluorométhyl)silane, le triméthyl(trifluorométhyl)silane, le triméthoxy (3,3,3-trifluoropropyl)silane, le triméthyl(trifluorométhyl)silane, le diméthoxy-méthyl (3,3,3-trifluoropropyl)silane, le diisopropyl (3,3,4,4,5,5,6,6-nonafluorohexyl(silane), le triéthoxy[4-(trifuorométhyl)phényl]silane et le 1H,1H,2H,2H-perfluorooctyltriéthoxysilane.

6. Procédé de fabrication d'un matériau d'électrode, le procédé comprenant :
une étape de préparation de poudre d'argent à revêtement de résine à base de fluor (S100) de préparation d'une poudre d'argent à revêtement de résine à base de fluor 200, selon l'une quelconque des revendications 1 à 5 ;
une étape de préparation de poudre d'argent (S110) de préparation de la poudre d'argent 100 ayant une taille de grain de 10 nm à 10 µm ;
une étape de mélange de poudre d'argent (S120) de mélange de la poudre d'argent à revêtement de résine à base de fluor 200 préparée dans l'étape de préparation de la poudre d'argent à revêtement de résine à base de fluor (S100) et la poudre d'argent 100 préparée dans l'étape de préparation de poudre d'argent (S110) ; et
une étape de frittage (S130) d'impression d'une poudre de mélange 210 mélangée dans l'étape de mélange de poudre d'argent (S120) sur une surface d'une électrode 300 puis le frittage de la poudre de mélange 210 à une température de frittage réglée.

7. Procédé selon la revendication 6, dans lequel dans l'étape de frittage (S130), la température de frittage est réglée à une plage de 300 à 350 °C.

8. Procédé selon la revendication 7, dans lequel dans l'étape de frittage (S130), un temps de frittage est réglé à une plage de 1 à 30 minutes selon une quantité d'impression.
